# EUROPÄISCHE PATENTSCHRIFT

(11) **EP 1 480 860 B1**
(45) Veröffentlichungstag und Bekanntmachung des Hinweises auf die Patenterteilung: **15.11.2006**
(21) Anmeldenummer: 02779126.8
(22) Anmeldetag: 26.09.2002
(51) Int. Cl.: B60S 1/34

(54) **WISCHARM**
WIPER ARM
BRAS DE MONTURE D'ESSUIE-GLACE

(30) Priorität: 27.02.2002 DE 10208537
(43) Veröffentlichungstag der Anmeldung: 01.12.2004
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2002/003635
(87) Internationale Veröffentlichungsnummer: WO 2003/072407

(56) Entgegenhaltungen:
- DE-A- 3 926 714
- DE-A- 10 020 004
- DE-A- 19 620 355
- US-A- 5 652 994

## Beschreibung

### Stand der Technik

Die Erfindung geht von einem Wischarm nach dem Oberbegriff des Anspruchs 1 aus.

Bekannte Scheibenwischer weisen einen Wischarm auf, der aus einem angetriebenen Befestigungsteil, einem mit diesem über ein Abklappgelenk verbundenen Gelenkteil und aus einer sich an das Gelenkteil anschließenden Wischstange aufgebaut ist. Ferner besitzt der Scheibenwischer ein an der Wischstange angelenktes Wischblatt, das aus einem Tragelement und einer von diesem gehaltenen Wischleiste besteht.

Das Befestigungsteil, das Gelenkteil und die daran gegebenenfalls angeformte Wischstange sind häufig Blechbiegeteile, die durch Stanzen, Biegen und Tiefziehen geformt werden. Ihre Form wird durch unterschiedliche Anforderungen und Belastungen beeinflusst. So sollte der Wischarm möglichst torsionssteif, biegesteif und schwingungsarm sein und das Sichtfeld des Fahrers nicht beeinträchtigen. Bekannte Wischarme besitzen ein relativ breites Befestigungsteil und weisen in der Regel ein zur Kraftfahrzeugscheibe hin offenes U-Profil auf.

Aus der DE 197 35 301 A1 ist ein Wischarm mit einem Befestigungsteil und einem Gelenkteil mit einer angeformten Wischstange bekannt. Von den aufgeführten Bauteilen ist mindestens eines aus Blech geformt, wobei in verschiedenen Bereichen je nach Beanspruchung unterschiedlich viele Blechlagen übereinander gefaltet werden, bis die für den jeweiligen Querschnitt erforderliche Materialstärke erreicht ist. Das Material kann dabei einfach oder mehrfach um ca. 180° umgelegt werden, oder es können entfernte Flächenbereiche in einem oder vorzugsweise in mehreren Schritten zusammengelegt werden, um sich gegenseitig zu stützen.

Somit können aus einer relativ dünnen, ebenen Blechtafel Blechteile hergestellt werden, die in unterschiedlichen Bereichen unterschiedliche Materialstärken besitzen, die an die zu erwartenden Belastungen angepasst sind. Die Blechteile weisen Kontur- und Faltflächen auf. Die Konturflächen werden verwendet für die grundlegende Formgebung des Blechteils und die Faltflächen für Befestigungsbereiche und um unterschiedliche Materialstärken zu erzielen. Das Stanz- und Biegeverfahren ist relativ aufwändig. Ferner können nur Wandstärken erzielt werden, die ein Vielfaches der Wandstärke des Ausgangsblechs betragen. Schließlich können die Blechteile nur aus einem Werkstoff bestehen.

### Vorteile der Erfindung

Nach der Erfindung sind ein Außenblech und ein Innenblech eines Teils des Wischarms übereinander liegend um eine gemeinsame Biegekante gebogen, wobei das Außenblech an seinen längs zur Biegekante verlaufenden Seitenrändern Verbindungsnocken aufweist, die in passende Aussparungen an den entsprechenden Seitenrändern des Innenblechs eingreifen. Beim gemeinsamen Biegen um die Biegekante erfährt das Außenblech einen Biegeradius, der um die Stärke des Innenblechs größer ist als der Biegeradius des Innenblechs, so dass die Verbindungsnocken in die Aussparungen hinein gezogen werden und am Grund der Aussparungen zur Anlage kommen. Dabei ist die Breite des Außenblechs auf die Breite des Innenblechs und die Tiefe der Aussparungen so abgestimmt, dass das Außenblech das Innenblech vollständig abdeckt und zwischen dem Außenblech und dem Innenblech eine Vorspannung entsteht. Nach dem Biegen sind das Innen- und das Außenblech spielfrei und formschlüssig miteinander verbunden und besitzen eine erhöhte Gesamtsteifigkeit.

Die übereinander liegenden Blechlagen sind an denjenigen Stellen angeordnet, an denen große Belastungen auftreten, die durch äußere Kräfte, wie Reib- oder Massenkräfte, sowie innere Kräfte, wie beispielsweise Zugkräfte im Bereich der Federeinhängung, hervorgerufen werden. Der Wischarm erhält somit genau an den Stellen eine Versteifung, an denen es funktional, aus Festigkeitsgründen oder aus Gründen der Fertigungstechnik erforderlich ist. Indem der Wischarm funktions- und belastungsorientiert verstärkt und im übrigen aus dünnwandigem Blech hergestellt wird, wird gegenüber bekannten Lösungen Material eingespart und das Gewicht verringert. Weniger Gewicht des Wischarms bedeutet gleichzeitig auch geringere Massenkräfte, welche durch die oszillierende Bewegung entstehen, so dass zudem der Wischerantrieb entsprechend kleiner dimensioniert werden kann.

Erfindungsgemäß können sowohl gleiche Werkstoffe mehrlagig verbaut oder aber auch hochfeste Werkstoffe mit Leichtbauwerkstoffen, wie beispielsweise Aluminium, gepaart werden. Die Paarung von Stahl- und Aluminiumwerkstoffen ist durch eine Oberflächenbehandlung des Stahlwerkstoffs mit einer aluminiumähnlichen Beschichtung problemlos möglich. Stahlblech mit dieser Beschichtung, z.B. Galfan, ist als beschichtetes Bandmaterial erhältlich und wird schon bei bekannten Wischarmen eingesetzt, da es neben dem Gewichtsvorteil auch gut lackiert werden kann.

Vorteilhafterweise kann der Werkstoffeinsatz für die einzelnen Bereiche des Wischarms variiert und nach der Belastung und der Funktion ausgewählt werden. So werden an Stellen, an denen genietet oder verkrimpt wird, Werkstoffe eingesetzt, die ausreichend duktil sind und an anderen Stellen, an denen keine hohen Anforderungen an die Verformbarkeit bestehen, werden festere und sprödere Werkstoffe verwendet. In einer Ausgestaltung der Erfindung sind das Außen- und das Innenblech aus einem Blechstreifen geformt und durch Falten um 180° um eine Querachse übereinander gelegt und zu einem mehrlagigen Bauteil weiter verarbeitet. Diese Variante eignet sich besonders zur Verstärkung von Endbereichen.

Für die Anordnung der Bleche sieht die Erfindung mehrere Möglichkeiten vor, die verschiedene Funktionen erfüllen und nach Bedarf eingesetzt werden können. In einer ersten Variante dient das Innenblech als partielles Verstärkungsblech. Es verstärkt in diesem Fall besonders belastete Bereiche des Außenblechs und ist von außen nicht sichtbar. Seine Festigkeit kann größer sein als die des Außenblechs, das seinerseits eine bessere Korrosionsbeständigkeit und/oder ein geringeres Gewicht aufweisen kann.

In einer zweiten Variante besteht das Bauteil aus zwei einlagigen Teilen, die mit sich nur in einem Verbindungsbereich überlappen und beim Biegeprozess miteinander verbunden werden. Dabei ist im Verbindungsbereich ein Blechteil als Außenblech mit mehreren Verbindungsnocken und das andere als Innenblech mit den entsprechenden Aussparungen gestaltet. Damit die beiden Blechteile außerhalb des Verbindungsbereichs eine einander angepasste Außenkontur aufweisen, besitzt das als Innenblech ausgebildete Blechteil im Verbindungsbereich eine eingeprägte Stufe, die der Blechstärke des als Außenblech dienenden Blechteils entspricht. Nach dem Biegevorgang sind beide Blechteile spielfrei und formschlüssig miteinander verbunden und ihre Außenkonturen sind einander angeglichen. Sie weisen lediglich eine Fuge am Übergang auf, die von außen gesehen als Designelement erscheint. Auch hierbei kann es zweckmäßig sein, unterschiedliche Werkstoffe zu verwenden.

Alle Blechlagen werden vorteilhafterweise mit Hilfe bekannter Verfahren aus einem ebenen Blechstreifen hergestellt und besitzen nach dem Stanzen die äußeren Konturen, einschließlich Verbindungsnocken und Aussparungen. In einem folgenden Verfahrensschritt werden diese Blechlagen übereinander gelegt, so dass die Verbindungsnocken zu den Aussparungen ausgerichtet sind. Danach werden das Innenblech und das Außenblech in einem Biegewerkzeug gemeinsam über eine Biegekante eines Werkzeugkerns gebogen. Da die Außenkonturen der einzelnen Blechlagen im Wesentlichen nicht von Blechteilen bekannter Wischarme abweichen, können gleiche Werkzeuge verwendet werden. Der Aufwand um das Biegewerkzeug den beiden Blechlagen anzupassen, da beide gleichzeitig umgeformt werden, ist nicht sehr hoch. Soll der Wischarm durch ein partielles Verstärkungsblech aus dem gleichen Material verstärkt werden, so kann dieses aus dem gleichen Blechstreifen ausgestanzt werden, indem es beispielsweise im Bereich des sonst anfallenden Verschnitts angeordnet wird und so zur besseren Materialausnutzung führt.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Wischarm in der Draufsicht,
- Fig. 2-4: einzelne Verfahrensschritte zur Fertigung im Schnitt des Wischarms gemäß einer Linie IV-IV in Fig. 1,
- Fig. 5-7: einzelne Verfahrensschritte zum Herstellen eines doppellagigen Blechstreifens und
- Fig. 8-10: Ansichten verschiedener Anwendungsvarianten von unten.

### Beschreibung der Ausführungsbeispiele

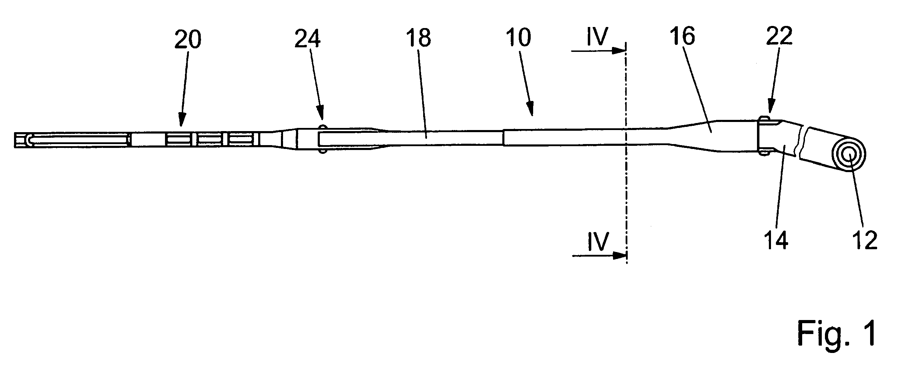

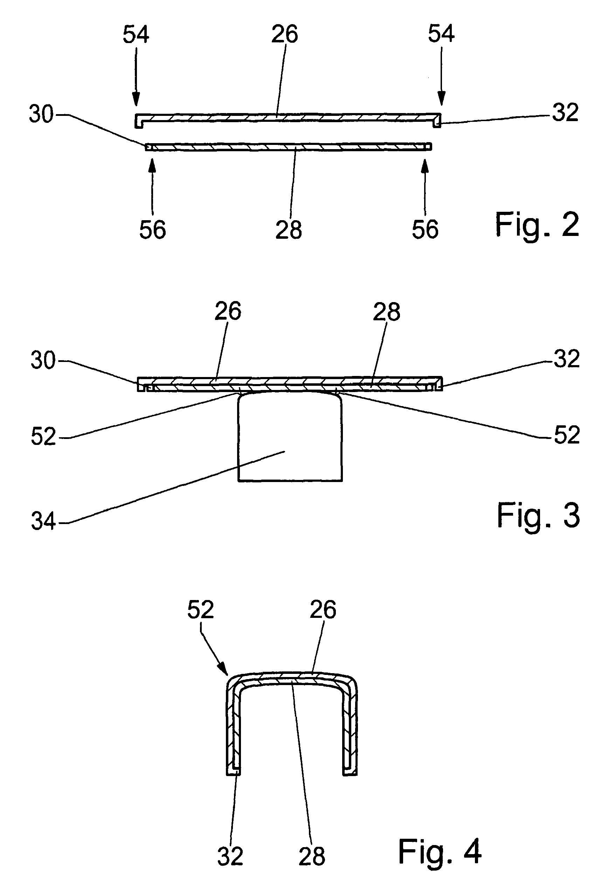

Ein Wischarm 10 eines Scheibenwischers für ein Kraftfahrzeug überträgt das Antriebsmoment von einer Antriebswelle 12 auf ein Wischblatt 20. Er besitzt ein Befestigungsteil 14, das mit einem Ende auf der Antriebswelle 12 sitzt und mit seinem anderen Ende über ein Abklappgelenk 22 mit einem Gelenkteil 16 verbunden (Fig. 1) ist. Am freien Ende des Gelenkteils 16 schließt sich eine Wischstange 18 an, die über ein Gelenk 24 mit dem Wischblatt 20 verbunden ist. Das Befestigungsteil 14 und das Gelenkteil 16 sowie die daran angeformte Wischstange 18 sind Blechbiegeteile und besitzen ein zur Kraftfahrzeugscheibe hin offenes U-Profil. Um die erforderliche Steifigkeit und Festigkeit über die Länge des Wischarms 10 zu gewährleisten, sind mindestens einige Bereiche der Blechbiegeteile 14, 16, 18, die höher belastet sind oder Einrichtungen für eine Zugfeder aufweisen, doppelwandig ausgeführt. Als Beispiel ist in Fig. 4 ein Schnitt entsprechend der Schnittlinie IV-IV in Fig. 1 dargestellt.

Das Gelenkteil 16 wird in diesem Bereich aus zwei Blechlagen gebildet, wobei ein Innenblech 28 unter einer Vorspannung an einem Außenblech 26 anliegt (Fig. 4). Das Außenblech 26 weist an den Seitenrändern 54 mehrere Verbindungsnocken 32 auf, die nach dem Stanzen aus einer ebenen Blechtafel um 90° zum angrenzenden Bereich abgewinkelt sind (Fig. 2). Das Innenblech 28 wird ebenfalls aus einer ebenen Blechtafel ausgestanzt, wobei gleichzeitig mehrere Aussparungen 30 an den Seitenrändern 56 hergestellt werden. Das Innenblech 28 und das Außenblech 26 können aus dem gleichen oder aus unterschiedlichen Werkstoffen bestehen. Kombinationen aus gleichem Werkstoff sind an denjenigen Stellen angeordnet, an denen große Belastungen auftreten, während beispielsweise Kombinationen mit duktilen Werkstoffen an Stellen verwendet werden, an denen im späteren Fertigungsverlauf genietet oder verkrimpt wird.

In einem nächsten Verfahrensschritt wird das Außenblech 26 auf das Innenblech 28 gelegt und zwar so, dass die Verbindungsnocken 32 zu den Aussparungen 30 ausgerichtet sind. Die ausgerichteten Bleche 26, 28 werden dann in einem Biegewerkzeug gemeinsam über eine Biegekante 52 eines Werkzeugkerns 34 gebogen (Fig. 3). Die Breite des Außenblechs 26 und die Breite des Innenblechs 28 sowie die Tiefe der Aussparungen 30 sind so aufeinander abgestimmt, dass beim Biegen die Verbindungsnocken 32 in die Aussparungen 30 gezogen werden und am Ende der Aussparungen 30 zur Anlage kommen, wobei am Ende des Biegevorgangs zwischen dem Außenblech 26 und dem Innenblech 28 eine Vorspannung erzeugt wird, die eine spielfreie, torsionssteife und biegesteife Verbindung gewährleistet (Fig. 4).

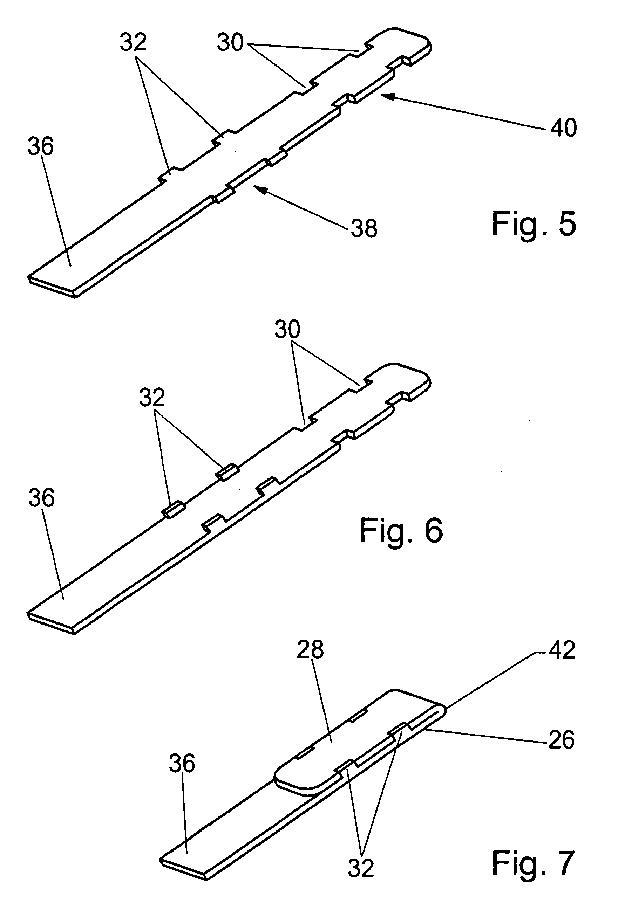

In einer Ausgestaltung der Erfindung sind das Außenblech 26 und das Innenblech 28 in Längsrichtung hintereinander angeordnet und aus einer Blechtafel gestanzt. Ein gestanzter Blechstreifen 36 ist in einem ersten Bereich 38 als Außenblech 26 mit Verbindungsnocken 32 und in einem zweiten Bereich 40 als Innenblech 28 mit Aussparungen 30 gestaltet. Anschließend wird das Innenblech 28 durch Falten um 180° über das Außenblech 26 gelegt, wobei die Blechteile 26, 28 über eine Falte 42 zusätzlich miteinander verbunden sind (Fig. 7). Die Verbindungsnocken 32 sind zu den Aussparungen 30 ausgerichtet, so dass sie beim Biegen des Blechstreifens 36 um die Biegekante 52 ihre Funktion ausüben können. Nach dieser Variante kann auf einfache Weise ein Endbereich verstärkt werden, beispielsweise am hakenförmigen Ende der Wischstange 18.

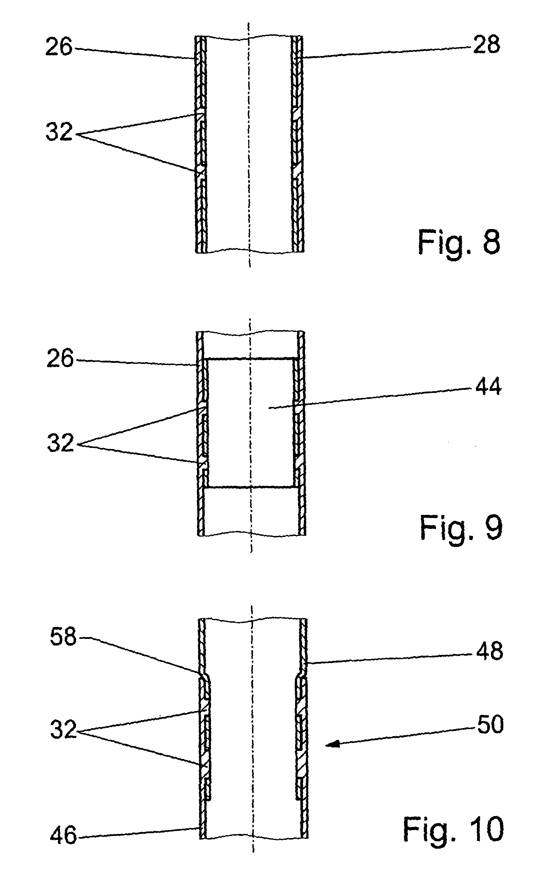

Fig. 8 zeigt eine Einsatzvariante der Erfindung, nach der das Außenblech 26 und das Innenblech 28 die gleiche Länge aufweisen. In diesem Fall besteht das entsprechende Bauteil über seine gesamte Länge aus zwei Blechlagen. Dies bietet im Vergleich zu einem entsprechend stärkeren einlagigen Bauteil den Vorteil, dass unterschiedliche Werkstoffe für die einzelnen Blechlagen verwendet werden können, um beispielsweise weniger Gewicht oder eine bessere Verformbarkeit zu erhalten. Zur gezielten Verstärkung einzelner Bereiche sieht eine Variante zweckmäßigerweise ein partielles Verstärkungsblech 44 vor, welches wesentlich kürzer als das Außenblech 26 ist und nur an einer stark belasteten Stelle angeordnet ist (Fig. 9). In beiden Varianten wird die Außenkontur des Bauteils ausschließlich durch das Außenblech 26 gebildet und das Innenblech 28 bzw. das Verstärkungsblech 44 ist vollständig verdeckt.

Das der Erfindung zu Grunde liegende Verfahren kann außerdem dazu verwendet werden, um zwei Blechteile 46, 48 miteinander zu verbinden (Fig. 10). In einem Verbindungsbereich 50 überlappen sich die Blechteile 46, 48, wobei ein erstes Blechteil 46 als Außenblech mit Verbindungsnocken 32 und ein zweites Blechteil 48 als Innenblech mit Aussparungen 30 gestaltet ist. Durch den Biegevorgang um die Biegekante 52 werden das erste Blechteil 46 und das zweite Blechteil 48 spielfrei miteinander verbunden. Damit die Außenkontur des zweiten Blechteils 48 der Außenkontur des ersten Blechteils 46 angeglichen ist, ist im zweiten Blechteil 48 zum Verbindungsbereich 50 hin eine Stufe 58 eingeprägt, deren Höhe der Materialstärke des ersten Blechteils 46 entspricht.

### Bezugszeichen

- 10: Wischarm
- 12: Antriebswelle
- 14: Befestigungsteil
- 16: Gelenkteil
- 18: Wischstange
- 20: Wischblatt
- 22: Abklappgelenk
- 24: Gelenk
- 26: Außenblech
- 28: Innenblech
- 30: Aussparung
- 32: Verbindungsnocken
- 34: Werkzeugkern
- 36: Blechstreifen
- 38: erster Bereich
- 40: zweiter Bereich
- 42: Falte
- 44: Verstärkungsblech
- 46: erstes Blechteil
- 48: zweites Blechteil
- 50: Verbindungsbereich
- 52: Biegekante
- 54: Seitenrand
- 56: Seitenrand
- 58: Stufe

## Patentansprüche

1. Wischarm (10), der ein Befestigungsteil (14) und ein Gelenkteil (16) mit einer Wischstange (18) umfasst, von denen mindestens ein Teil (14, 16, 18) aus Blech durch Stanzen und Biegen gefertigt ist und mindestens einen Bereich mit mehreren Blechlagen (26, 28) aufweist, **dadurch gekennzeichnet, dass** ein Außenblech (26) und ein Innenblech (28) übereinander liegend gemeinsam um eine Biegekante (52) gebogen sind, wobei das Außenblech (26) an seinen längs zur Biegekante (52) verlaufenden Seitenrändern (54) Verbindungsnocken (32) aufweist, die in passende Aussparungen (30) an den entsprechenden Seitenrändern (56) des Innenblechs (28) eingreifen, und das Innenblech (28) nach dem Biegen unter einer Vorspannung am Außenblech (26) anliegt.

2. Wischarm (10) nach Anspruch 1, **dadurch gekennzeichnet, dass** die Bleche (26, 28) aus unterschiedlichen Werkstoffen bestehen.

3. Wischarm (10) nach Anspruch 1, **dadurch gekennzeichnet, dass** das Außenblech (26) und das Innenblech (28) aus einem Blechstreifen (36) geformt und durch Falten um 180° übereinander gelegt sind, wobei die Falte (42) quer zur Biegekante (52) verläuft.

4. Wischarm (10) nach einem der vorhergehenden Ansprüche, **dadurch gekennzeichnet, dass** das Innenblech (28) ein partielles Verstärkungsblech (44) ist.

5. Wischarm (10) nach einem der vorhergehenden Ansprüche, **dadurch gekennzeichnet, dass** ein erstes Blechteil (46) mit einem zweiten Blechteil (48) verbunden ist, indem sich die beiden Blechteile (46, 48) in einem Verbindungsbereich (50) überlappen und eines der Blechteile (46, 48) als Außenblech (26) und eines als Innenblech (28) gestaltet ist.

6. Wischarm (10) nach Anspruch 5, **dadurch gekennzeichnet, dass** das als Innenteil (26) gestaltete zweite Blechteil (48) zum Verbindungsbereich hin (50) eine Stufe (58) aufweist, deren Höhe der Blechstärke des ersten Blechteils (46) entspricht.

7. Verfahren zum Herstellen eines Wischarms nach einem der vorhergehenden Ansprüche, **dadurch gekennzeichnet, dass** in einem ersten Verfahrensschritt aus einem Blech die Konturen des Außenblechs (26) und des Innenblechs (28) gestanzt werden, dass in einem zweiten Verfahrensschritt die Verbindungsnocken (32) abgewinkelt werden, dass in einem dritten Verfahrensschritt das Außenblech (26) auf das Innenblech (28) gelegt wird, so dass die Verbindungsnocken (32) zu den Aussparungen (30) ausgerichtet sind, und dass in einem vierten Verfahrensschritt das Außenblech (26) gemeinsam mit dem Innenblech (28) um eine Biegekante (52) gebogen werden.

8. Verfahren nach Anspruch 7, **dadurch gekennzeichnet, dass** das Außenblech (26) und das Innenblech (28) aus einem Blechstreifen (36) in Richtung der Biegekante (52) hintereinander angeordnet gestanzt und so zusammen gefaltet werden, dass sie übereinander liegen und die Verbindungsnocken (32) zu den Aussparungen (30) ausgerichtet sind.

## Claims

1. Wiper arm (10) which comprises a fastening part (14) and an articulated part (16) with a wiper rod (18), of which at least one part (14, 16, 18) is manufactured from sheet metal by punching and bending and has at least one region with a plurality of sheet layers (26, 28), **characterized in that** an outer sheet (26) and an inner sheet (28), lying one on the other, are bent together about a bending edge (52), the outer sheet (26) having, on its side edges (54) running longitudinally with respect to the bending edge (52), connecting projections (32) which engage in matching cutouts (30) on the corresponding side edges (56) of the inner sheet (28), and the inner sheet (28), after the bending, bearing against the outer sheet (26) under prestress.

2. Wiper arm (10) according to Claim 1, **characterized in that** the sheets (26, 28) are composed of different materials.

3. Wiper arm (10) according to Claim 1, **characterized in that** the outer sheet (26) and the inner sheet (28) are formed from a sheet-metal strip (36) and are placed one above the other by folding through 180°, the fold (42) running transversely with respect to the bending edge (52).

4. Wiper arm (10) according to one of the preceding claims, **characterized in that** the inner sheet (28) is a partial reinforcing sheet (44).

5. Wiper arm (10) according to one of the preceding claims, **characterized in that** a first sheet part (46) is connected to a second sheet part (48) by the two sheet parts (46, 48) overlapping in a connecting region (50) and one of the sheet parts (46, 48) being designed as an outer sheet (26) and one as an inner sheet (28).

6. Wiper arm (10) according to Claim 5, **characterized in that** the second sheet part (48), which is designed as the inner part (26), has, towards the connecting region (50), a step (58), the height of which corresponds to the sheet thickness of the first sheet part (46).

7. Method for producing a wiper arm according to one of the preceding claims, **characterized in that**, in a first method step, the contours of the outer sheet (26) and of the inner sheet (28) are punched from a metal sheet, **in that**, in a second method step, the connecting projections (32) are bent, **in that**, in a third method step, the outer sheet (26) is placed onto the inner sheet (28), so that the connecting projections (32) are aligned with the cutouts (30), and **in that**, in a fourth method step, the outer sheet (26) is bent together with the inner sheet (28) about a bending edge (52).

8. Method according to Claim 7, **characterized in that** the outer sheet (26) and the inner sheet (28) are punched from a sheet-metal strip (36) in a consecutive arrangement in the direction of the bending edge (52) and are folded together in such a manner that they lie one above the other and the connecting projections (32) are aligned with the cutouts (30).

## Revendications

1. Bras d'essuie-glace (10) comportant une pièce de fixation (14) et une pièce d'articulation (16) pour une tige d'essuie-glace (18), au moins une pièce (14, 16, 18) étant fabriquée en tôle par emboutissage et pliage en présentant au moins une zone à plusieurs couches de tôles (26, 28),
**caractérisé en ce qu'**
une tôle extérieure (26) et une tôle intérieure (28) sont superposées et pliées en commun autour d'une arête de pliage (52),
la tôle extérieure (26) a le long des bords latéraux (54) dirigés suivant l'arête de pliage (52), des bossages de liaison (32) pénétrant dans des cavités adaptées (30) des bords latéraux correspondants (56) de la tôle intérieure (28), et
la tôle intérieure (28) est appliquée, après pliage, avec précontrainte contre la tôle extérieure (26).

2. Bras d'essuie-glace (10) selon la revendication 1,
**caractérisé en ce que**
les tôles (26, 28) sont en des matériaux différents.

3. Bras d'essuie-glace (10) selon la revendication 1,
**caractérisé en ce que**
la tôle extérieure (26) et la tôle intérieure (28) sont formées dans une bande de tôle (36) et superposées par pliage à 180°, le pli (42) étant dirigé transversalement à l'arête de pliage (52).

4. Bras d'essuie-glace (10) selon l'une quelconque des revendications précédentes,
**caractérisé en ce que**
la tôle intérieure (28) est en partie une tôle de renforcement (44).

5. Bras d'essuie-glace (10) selon l'une quelconque des revendications précédentes,
**caractérisé par**
une première pièce en tôle (46) reliée à une seconde pièce en tôle (48), les deux pièces en tôle (46, 48) se chevauchant dans une zone de liaison (50) et l'une des pièces en tôle (46, 48) forme la tôle extérieure (26) et l'autre tôle intérieure (28).

6. Bras d'essuie-glace (10) selon la revendication 5,
**caractérisé en ce que**
la seconde pièce en tôle (48) formant la pièce intérieure (26) comporte un décrochement (58) en direction de la zone de liaison (50), la hauteur de ce décrochement correspondant à l'épaisseur de la tôle de la première pièce en tôle (46).

7. Procédé de fabrication d'un bras d'essuie-glace selon l'une quelconque des revendications précédentes,
**caractérisé en ce que**
selon une première étape du procédé, on emboutit les contours de la tôle extérieure (26) et de la tôle intérieure (28) dans une tôle,
dans une seconde étape du procédé, on recourbe les bossages de liaison (32),
dans une troisième étape, on place la tôle extérieure (26) sur la tôle intérieure (28) pour que les bossages de liaison (32) soient alignés vers les cavités (30), et
dans une quatrième étape du procédé, on replie la tôle extérieure (26) avec la tôle intérieure (28) autour d'une arête de pliage (52).

8. Procédé selon la revendication 7,
**caractérisé en ce que**
l'on emboutit la tôle extérieure (26) et la tôle intérieure (28) dans un ruban de tôle (36), l'une à la suite de l'autre dans la direction de l'arête de pliage (52) et on les plie ensemble de façon qu'elles soient superposées et que les bossages de liaison (32) soient alignés vers les cavités (30).
